# EUROPÄISCHE PATENTANMELDUNG

(11) **EP 2 644 648 A1**
(43) Veröffentlichungstag der Anmeldung: **02.10.2013**
(21) Anmeldenummer: 12162310.2
(22) Anmeldetag: 30.03.2012
(51) Int. Cl.: C08K 5/00, C08K 5/11, C08K 5/13, C08K 5/14

(54) **Carbonsäureester oder Polyetherester als Verarbeitungshilfsmittel für Fluorkautschuke**

(71) Anmelder: LANXESS Deutschland GmbH, 50569 Köln (DE)
(72) Erfinder: Kelbch, Stefan, 53804 Much (DE); Djurdjevic, Jelena, 51381 Leverkusen (DE); Isenberg-Schulz, Olaf, 40764 Langenfeld (DE); Mezger, Martin, 51399 Burscheid (DE)

(57) **Zusammenfassung**

Eine vulkanisierbare Mischung enthaltend mindestens einen Fluorkautschuk, mindestens einen Carbonsäureester, sowie einen Vernetzer ausgewählt aus bisphenolischen und peroxidischen Vernetzern, ein Verfahren zur Herstellung der erfindungsgemäßen vulkanisierbaren Mischung, ein Verfahren zur Herstellung eines Vulkanisats durch Vulkanisieren der erfindungsgemäßen Mischung, ein Vulkanisat, herstellbar nach dem erfindungsgemäßen Verfahren, die Verwendung der erfindungsgemäßen vulkanisierbaren Mischung zur Verarbeitung in der Spritzguß-oder Extrusions-Molding-Technologie, sowie durch Spritzpressen, Formpressen oder Kalandrieren, Spritzgußteile hergestellt aus der erfindungsgemäßen vulkanisierbaren Mischung sowie die Verwendung der erfindungsgemäßen vulkanisierbaren Mischung zur Herstellung von Formkörpern.

## Beschreibung

Die vorliegende Erfindung betrifft eine vulkanisierbare Mischung enthaltend mindestens einen Fluorkautschuk, mindestens einen Carbonsäureester, sowie einen Vernetzer ausgewählt aus bisphenolischen und peroxidischen Vernetzers, ein Verfahren zur Herstellung der erfindungsgemäßen vulkanisierbaren Mischung, ein Verfahren zur Herstellung eines Vulkanisats durch Vulkanisieren der erfindungsgemäßen Mischung, ein Vulkanisat, herstellbar nach dem erfindungsgemäßen Verfahren, die Verwendung der erfindungsgemäßen vulkanisierbaren Mischung zur Verarbeitung in der Spritzguß-oder Extrusions-Molding-Technologie, sowie durch Spritzpressen, Formpressen oder Kalandrieren, Spritzgußteile hergestellt aus der erfindungsgemäßen vulkanisierbaren Mischung sowie die Verwendung der erfindungsgemäßen vulkanisierbaren Mischung zur Herstellung von Formkörpern.

Fluorkautschuke sind die Polymere der Wahl für Hochtemperatur-Anwendungen wie O-Ringe und Dichtungen, bei denen Undichtigkeiten auch nach längerer Druckverformung verhindert werden müssen, bei gleichzeitiger guter Chemikalienresistenz. Für die Massenproduktion dieser Teile setzt sich mehr und mehr die Spritzguß-Technologie durch. Sie verbindet niedrige Produktionskosten durch kürzere Zykluszeiten und höhere Automationsmechanismen mit niedrigen Fehlertoleranzen in den Dimensionen der einzelnen Teile verglichen mit Formpress-Technologie.

Fluorkautschuke können z.B. bisphenolisch vernetzt werden. Die bisphenolische Vernetzung erfordert ein gewisses Mindest-Molekulargewicht der Fluorkautschukpolymere, um wenigstens zwei bisphenolische Netzpunkte pro Fluorkautschukkette zu garantieren. Leider sind Fluorkautschuke mit diesem Mindest-Molekulargewicht von im Allgemeinen 25.000 g/mol und höher wenig viskos und somit begrenzt fließfähig, was einer Verarbeitung in der SpritzgußTechnik entgegensteht.

In der Gummiindustrie besteht somit der Wunsch nach einer besseren Verarbeitbarkeit der eingesetzten Kautschuke. Dies betrifft insbesondere die Fließeigenschaften. Je niedrigviskoser der Rohkautschuk ist, desto einfacher ist die Verarbeitungstechnologie, desto größer ist die Produktivität und desto geringer ist der Abfall. Die genannten Aspekte sind insbesondere bei Fluorkautschuken von großer Relevanz, da es sich hierbei um teure Kautschuke handelt, die nicht durchgehend auf Spritzgießmaschinen der Gummiindustrie verarbeitet werden können.

In DE 19844338 A1 sind Fluorkautschukmischungen offenbart, enthaltend einen Fluorkautschuk, der neben vinylischen Endgruppen ausschließlich Wasserstoff-, Alkyl- und/oder Alkoxyendgruppen aufweist sowie ein ionisches Vernetzungssystem, umfassend mindestens eine organische Polyhydroxyverbindung, ein Oniumsalz sowie mindestens einen Säureakzeptor.

Die Fluorkautschukmischungen gemäß DE 19844338 A1 zeichnen sich durch eine geringe Viskosität des Vulkanisationscompounds aus sowie eine schnelle Vernetzung bei mit üblichen Fluorkautschukmischungen vergleichbarer Scorch-Resistenz und vergleichbarem Zug-DehnungsVerhalten und Heißluftalterungseigenschaften. Bei den eingesetzten Fluorkautschuken handelt es sich jedoch um spezielle Fluorkautschuke, die keine bzw. nur wenige ionische oder polare Endgruppen in der Polymerkette aufweisen.

EP 1 386 943 A1 betrifft vernetzbare Fluorelastomerzusammensetzungen, die sich dadurch auszeichnen, dass sie ein Vernetzersystem aufweisen, das zu einer verkürzten Nachvernetzungszeit bzw. keiner Nachvernetzungszeit führt. Dieses Vernetzersystem umfasst sowohl einen Bisphenol-Vernetzer als auch einen Peroxid-Vernetzer. Zusätzlich kann die vernetzbare Mischung gemäß EP 1 386 943 A1 einen Weichmacher enthalten, der die Viskosität der Mischung erniedrigt und die Verformung dadurch erleichert. Als geeigneter Weichmacher wird Pentaerythritolester (Siedepunkt: 170°C) genannt, der bevorzugt in Kombination mit 2,5-Dimethyl-2,5-di(t-butylperoxy)hexan als peroxidischen Vernetzer eingesetzt wird. Weitere Weichmacher sind in EP 1 386 943 A1 nicht erwähnt.

EP 1 632 531 A1 betrifft einen vulkanisierten Fluorkautschuk, der bei hohen Temperaturen und hohen Drucken genutzt werden kann und eine niedrige Härte aufweist. Die zur Herstellung des Fluorkautschuks geeignete vulkanisierbare Mischung kann als optionale Komponente einen Weichmacher enthalten. Dabei soll der Weichmacher einen verhältnismäßig niedrigen Siedepunkt aufweisen, bevorzugt von 250°C.

WO 96/01870 A1 betrifft Fuorelastomere, die eine Flüssigkeit, die mindestens eine Estergruppe enthält, als Verarbeitungshilfsmittel enthalten. In den Beispielen in WO 96/01870 A1 werden ein nicht näher definierter zweibasiger Ester sowie Diethyl-L-tartrat, Diethylhydroxyglutarat und Triethylcitrat eingesetzt. Zumindest die drei letztgenannten Verarbeitungshilfsmittel zeichnen sich durch die Anwesenheit mindestens einer OH-Gruppe aus.

**Aufgabe der vorliegenden Anmeldung** gegenüber dem Stand der Technik ist es, gut verarbeitbare Fluorkautschuke bereit zu stellen, die sich insbesondere durch eine gute Extrudierbarkeit sowie ein gutes Spritzgußverhalten auszeichnen, aufgrund ihrer niedrigen Viskosität, wobei die mechanischen Eigenschaften der vernetzten Fluorkautschuke sowie ihre Alterungsbeständigkeit und die Scorch-Zeiten nicht beeinträchtigt werden. Dabei soll die gesamte Breite von den im Stand der Technik bekannten Fluorkautschuken eingesetzt werden können.

**Diese Aufgabe wird gelöst** durch die Bereitstellung einer vulkanisierbaren Mischung enthaltend
a) mindestens einen Fluorkautschuk als Komponente A,
b) mindestens einen Dicarbonsäureester oder Polyetherester mit einem Siedepunkt von > 250°C, wobei der Dicarbonsäureester und der Polyetherester OH-Gruppen frei sind und der Dicarbonsäureester ausgewählt ist aus der Gruppe bestehend aus Adipaten, Phthalaten und Cyclohexandicarbonsäureestern, als Komponente B, und
c) einen Vernetzer, ausgewählt aus bisphenolischen Vernetzern und peroxidischen Vernetzern, bevorzugt bisphenolischen Vernetzern, als Komponente C.

Die erfindungsgemäße vulkanisierbare Mischung sowie Vulkanisate, die aus dieser Mischung hergestellt werden, zeichnen sich durch eine niedrige Viskosität aus, und sind so hervorragend extrudierbar und/oder im Spritzguß verarbeitbar. Wesentlich ist, dass die mechanischen Eigenschaften der herzustellenden vulkanisierten Fluorkautschuke sowie ihre Alterungsbeständigkeit nicht beeinträchtigt werden.

Die Mooney-Viskosität der erfindungsgemäßen vulkanisierbaren Mischung ist gegenüber vulkanisierbaren Mischungen des Standes der Technik, die keinen erfindungsgemäß eingesetzten Carbonsäureester enthalten, deutlich herab gesetzt. Des Weiteren wurde überraschenderweise gefunden, dass die Vulkanisation der erfindungsgemäßen vulkanisierbaren Mischungen gegenüber solchen des Standes der Technik wesentlich beschleunigt ist.

### Carbonsäureester (Komponente B):

Erfindungsgemäß enthält die vulkanisierbare Mischung mindestens einen Dicarbonsäureester oder Polyetherester mit einem Siedepunkt von > 250°C, wobei der Dicarbonsäureester und der Polyetherester OH-Gruppen frei sind und der Dicarbonsäureester ausgewählt ist aus der Gruppe bestehend aus Adipaten, Phthalaten und Cyclohexandicarbonsäureestern.

Der Dicarbonsäureester ist üblicherweise ein aliphatischer oder aromatischer Dicarbonsäureester.

Im Sinne der vorliegenden Anmeldung ist unter einem aliphatischen Dicarbonsäureester ein solcher Dicarbonsäureester zu verstehen, der keine aromatischen Gruppen trägt. Dicarbonsäureester, die aromatische Gruppen aufweisen, z.B. Phthalate, sind im Sinne der vorliegenden Anmeldung aromatische Dicarbonsäureester.

Besonders bevorzugte Dicarbonsäureester und Polyetherester sind ausgewählt aus der Gruppe bestehend aus Diadipaten, bevorzugt Di-n-butyladipat, Benzyl-2-ethylhexyladipat, Diethyladipat, Di-ethylhexyladipat, Di-isobutyladipat, Adipat-adipinsäure, Bis(nonylphenyl)adipat, Bis(methylcyclohexyl)adipat, Bis(2-fluoro-2,2-dinitroethyl)adipat, Bis(3,5,5-trimethylhexyl)adipat, Bis(1-methylpentadecyl)adipat, Bis(4-methylcyclohexyl)adipat, Di(tridecyl)adipat, Bis[2-(dimethylamino)ethyl]adipat, Bis(bicyclo[2.2.1]hept-5-en-2-ylmethyl)adipat, Bis(tetrahydrofurfuryl)adipat, Bis(2-hexyldecyl)adipat, Bis(2-mercaptoethyl)adipat, Bis(cyclohex-3-enylmethyl)adipat, Bis(2,3-epoxypropyl)adipat, Bis[2-[2-isopropyloxazolidin-3-yl]ethyl]adipat, Bis[(6-methylcyclohex-3-enyl)methyl]adipat, Dicapryladipat, Bis(6-methylheptyl)adipat, Bis[2-[[4-(2,2-dicyanovinyl)-3-methylphenyl]ethylamino]ethyl]adipat, Bis[2-(diethylamino)ethyl]adipat, Bis[(3,4-epoxy-6-methylcyclohexyl)methyl]adipat, Bis[2-[ethyl(3-methylphenyl)amino] ethyl]adipat, Bis(1-butylpentyladipat, Bis[2-[2-(2-butoxyethoxy)ethoxy]ethyl]adipat, Bis(3,4-epoxycyclohexylmethyl)adipat, Bis(2-butoxyethyl)adipat, Bis(2-methoxyethyl)adipat, Bis[2-(2-butoxyethoxy)ethyl]adipat, Dioctylsebacat, Polyetherestern, insbesondere Poly(oxy-1,2-ethandiyl, z.B. ADK Cizer^{®}, Tris(2-ethyl)-2-acetyloxy-propan-1,2,3-tricarboxylat, Cyclohexyldiestern, bevorzugt 1,2-, 1,3- oder 1,4-Diisononylcyclohexylester, Phthalaten, bevorzugt 1,2-, 1,3- oder 1,4-Di-n-octylphthalat, 1,2-, 1,3- oder 1,4-Diisononylphthalat, 1,2-, 1,3- oder 1,4-Diisodecylphthalat, 1,2-, 1,3- oder 1,4-Diisobutylphthalat, 1,2-, 1,3- oder 1,4-Diethylphthalat, 1,2-, 1,3- oder 1,4-Dimethylphthalat, 1,2-, 1,3- oder 1,4-Diethylhexylphthalat, 1,2-, 1,3- oder 1,4-Di-n-butylphthalat, 1,2-, 1,3- oder 1,4-Butylbenzylphthalat, 1,2-, 1,3- oder 1,4-Di-n-nonylphthalat, 1,2-, 1,3- oder 1,4-Di-n-decylphthalat, und Mischungen davon.

In einer bevorzugten Ausführungsform handelt es sich bei dem mindestens einen Dicarbonsäureester um einen aliphatischen Dicarbonsäureester, oder es wird in einer weiteren bevorzugten Ausführungsform ein Polyetherester eingesetzt. Dabei können die Alkylreste der aliphatischen Dicarbonsäureester unverzweigt sein (d.h. der Verzweigungsgrad ist 0) oder wenig verzweigt (d.h. der Verzweigungsgrad beträgt im Allgemeinen >0 bis 0,2) oder stark verzweigt sein (d.h. der Verzweigungsgrad beträgt im Allgemeinen >0,2 bis 0,5). Geeignete aliphatische Dicarbonsäureester sind vorstehend genannt.

Die Zahl der Verzweigungen des Alkylrests ist via ¹H-NMR über die Integration der Signale der Methylgruppen relativ zu den Methylen-und Methinprotonen messbar.

Bei Mischungen von Alkylresten (z.B. Isooctyl, Isononyl, Isodecyl) werden die Verzweigungen mit den Molprozenten der jeweiligen Isomere gewichtet, und so wird eine mittlere Verzweigung errechnet.

Die molaren Anteile bestimmt man dabei mittels Gaschromatographie.

Der Verzweigungsgrad ist molekulargewichtsunabhängig definiert als Zahl der Verzweigungen pro Kohlenstoffatom (Anzahl der Verzweigungen/Anzahl der Kohlenstoffatome), z. B. n-Decyl: 0/10 = 0, Ethylhexyl: 1/8 = 0,125.

Der mindestens eine Dicarbonsäureester oder Polyetherester weist einen Siedepunkt von > 250°C auf. Bevorzugt ist der Siedepunkt des mindestens einen Dicarbonsäureesters oder Polyetheresters > 250°C bis 800 °C, bevorzugt 260°C bis 450 °C.

Es wurde gefunden, dass sich der erfindungsgemäß eingesetzte mindestens eine Dicarbonsäureester oder Polyetherester hervorragend in die vulkanisierbare Mischung, enthaltend, neben der Komponente B, die Komponenten A und C sowie gegebenenfalls weitere Komponenten, einmischen lässt.

Es wurde des Weiteren gefunden, dass die mechanischen Eigenschaften durch Einmischung des mindestens einen erfindungsgemäß eingesetzten Dicarbonsäureesters oder Polyetheresters sowie die Härte von aus den erfindungsgemäßen vulkanisierbaren Mischungen hergestellten Vulkanisaten und die Alterungseigenschaften nicht beeinträchtigt werden.

Der erfindungsgemäß eingesetzte mindestens eine Dicarbonsäureester oder Polyetherester wird in der vulkanisierbaren Mischung im Allgemeinen in einer Menge von >0 bis 20 phr, bevorzugt 0,5 bis 15 phr, besonders bevorzugt 1,0 bis 12 phr, ganz besonders bevorzugt 1,2 bis 11,5 phr, insbesondere ganz besonders bevorzugt 3,0 bis 11 phr, weiter insbesondere ganz besonders bevorzugt 4,0 bis 10 phr, bezogen auf 100 Gew.-Teile des mindestens einen als Komponente A eingesetzten Fluorkautschuks, eingesetzt (phr: parts per hundred of rubber).

Der mindestens eine erfindungsgemäß eingesetzte Dicarbonsäureester oder Polyetherester kann nach dem Stand der Technik bekannten Verfahren hergestellt werden bzw. ist kommerziell erhältlich.

### Fluorkautschuk (Komponente A):

Als Komponente A wird in den erfindungsgemäßen Mischungen mindestens ein Fluorkautschuk eingesetzt.

Als Fluorkautschuke sind grundsätzlich alle dem Fachmann bekannten Fluorkautschuke geeignet. Bevorzugt handelt es sich bei dem mindestens einen erfindungsgemäß einsetzbaren Fluorkautschuk um einen Fluorkautschuk, der aus einem oder mehreren der folgenden Monomere aufgebaut ist:
- gegebenenfalls substituierte Ethylene, die neben Fluor Wasserstoff und/oder Chlor enthalten können, bevorzugt Vinylidenfluorid, Tetrafluorethylen und Chlortrifluorethylen,
- fluorierte 1-Alkene mit 3 bis 8 Kohlenstoffatomen, bevorzugt Hexafluorpropylen, 3,3,3-Trifluorpropylen, Chlorpentafluorpropylen, Hexafluorisobuten und
- perfluorierte Vinylether, bevorzugt
solche der Formeln

CF₂ = CFOX oder CF₃-(CF₂)ₘ-CF=CFOX

worin
X = C₁-C₃-Perfluoralkyl oder -(CF₂CFY-O)ₒ-R_{F},
wobei
- O: 1 bis 4
- Y: F oder CF₃
- R_{F}: C₁ - C₃-Perfluoralkyl und
- m: 1 oder 2 bedeuten.

Bevorzugt handelt es sich bei dem erfindungsgemäß einsetzbaren mindestens einen Fluorkautschuk und ein Homo-, Co- oder Terpolymer aufgebaut aus einem oder mehreren der vorstehend genannten Monomere. Besonders bevorzugt wird eine Kombination aus Vinylidenfluorid, Hexafluorpropylen und/oder Tetrafluorethylen eingesetzt. Ganz besonders bevorzugte Fluorkautschuke sind:
- Copolymere aufgebaut aus Vinylidenfluorid und Tetrafluorethylen oder
- Copolymere aufgebaut aus Vinylidenfluorid und Hexafluorpropylen oder
- Terpolymere aufgebaut aus Vinylidenfluorid, Tetrafluorethylen und Hexafluorpropylen oder
- Terpolymere aufgebaut aus Vinylidenfluorid, Tetrafluorethylen, Hexafluorpropylen und mindestens einem zur peroxidischen Vernetzung geeigneten Monomeren.

Des Weiteren kann der mindestens eine Fluorkautschuk - zusätzlich zu den vorstehend genannten Monomeren - aus den vorstehend genannten perfluorierten Vinylethern aufgebaut sein, dabei kann es sich um einen Perfluoroalkylvinylether handeln, bevorzugt um Perfluor-(methyl-vinyl-ether).

Zusätzlich zu den vorstehend genannten Monomeren können die Fluorkautschuke aus mindestens einem zur peroxidischen Vernetzung geeigneten Monomeren (Cure Site Monomer = CSM), bevorzugt brom- und/oder iodhaltige Cure Site Monomere, besonders bevorzugt 4-Brom-3,3,4,4-tetrafluorbuten-1 (BTFB), Bromtrifluorethylen (BTFE), 1-Brom-2,2-difluorethylen, Vinylbromid, Perfluorallylbromid, 4-Brom-perfluorbuten-1 und/oder 4-Iod-3,3,4,4-tetrafluorbuten-1 (ITFB), aufgebaut sein. Ein Beispiel für einen entsprechenden Fluorkautschuk stellt ein Terpolymer aufgebaut auf Vinylidenfluorid, Tetrafluorethylen, Hexafluorpropylen und mindestens einem zur peroxidischen Vernetzung geeigneten Monomeren dar.

Das mindestens eine zur peroxidischen Vernetzung geeignete Monomer (Cure Site Monomer = CSM) weist bevorzugt eine der folgenden Formeln auf:

CF₂ = CFHal oder CF₃-(CF₂)ₘ-CF=CFHal

mit
- Hal: Cl, Br oder I, bevorzugt Br oder I; und
- m: 1 oder 2

Die Fluorkautschuke können aus einzelnen Cure-Site Monomeren oder Mischungen von Cure-Site Monomeren, bevorzugt Mischungen von brom- und iodhaltigen Cure-Site Monomeren, aufgebaut sein.

Beispielsweise kann der mindestens eine Fluorkautschuk aus der folgenden monomeren Zusammensetzung aufgebaut sein:
- 20 bis 90 mol-%: Vinylidenfluorid,
- 10 bis 80 mol-%: Hexafluorpropylen,
- 0 bis 40 mol-%: Tetrafluorethylen und
- 0 bis 25 mol-%: perfluorierte Vinylether der Formeln
CF₂ = CFOX oder CF₃-(CF₂)-CF=CFOX
mit X = C₁-C₃-Perfluoralkyl oder -(CF₂-CFY-O)ₒ-R_{F},
wobei
o 1 bis 4
Y F oder CF₃
R_{F} C₁ - C₃-Perfluoralkyl und
m 1 oder 2 bedeuten, und
- 0 bis 25 mol-%: eines zur peroxidischen Vernetzung geeigneten Monomeren,
wobei die Gesamtsumme der Komponenten 100 mol% ergibt.

Ganz besonders bevorzugt handelt es sich bei dem erfindungsgemäß eingesetzten Fluorkautschuk um ein Copolymer aufgebaut aus 30 bis 60 mol.-% Vinylidenfluorid und 40 bis 70 mol.-% Hexafluorpropylen, ein Terpolymer aufgebaut aus 45 bis 85 mol.-% Vinylidenflourid, 1 bis 40 mol.-% Tetrafluorethylen und 15 bis 45 mol.-% Hexafluorpropylen oder ein Terpolymer aufgebaut aus 45 bis 85 mol.-% Vinylidenflourid, 1 bis 40 mol.-%, bevorzugt 1 bis 39,9 mol.-%, Tetrafluorethylen, 15 bis 45 mol.-% Hexafluorpropylen und 0 bis 20 mol.-%, bevorzugt 0,1 bis 20 mol-%, mindestens einem zur peroxidischen Vernetzung geeigneten Monomeren, wobei die Gesamtsumme der Komponenten des jeweiligen Co- oder Terpolymers jeweils 100 mol% ergibt. Das zahlenmittlere Molekulargewicht des erfindungsgemäß eingesetzten Fluorkautschuks beträgt im Allgemeinen 25 bis 100 kg/mol, bevorzugt 40 bis 80 kg/mol. Die Molekulargewichtsverteilung M_{w}/Mₙ beträgt im Allgemeinen 1,5 bis 3,5. Das zahlenmittlere Molekulargewicht und das gewichtsmittlere Molekulargewicht werden mittels Gelpermeationschromatographie mit THF als Elutionsmittel ermittelt (DIN 55672-1 (GPC mit THF als Elutionsmittel)).

Die Mooney-Viskositäten ML1+10 des erfindungsgemäß eingesetzten Fluorkautschuks liegen bei 121°C im Allgemeinen bei 1 bis 80, bevorzugt bei 15 bis 60. Die Mooney-Viskosität wird nach DIN 53523 bestimmt.

Der erfindungsgemäß eingesetzte mindestens eine Fluorkautschuk wird im Allgemeinen gemäß dem Stand der Technik bekannten Verfahren hergestellt. Bevorzugt erfolgt die Herstellung des Fluorkautschuks durch wässrige Emulsions- oder Suspensionspolymerisation (Ullmann's Encyclopedia of Ind. Chem., Vol. A-11, VCH-Verlagsgesellschaft, Weinheim, 1988, S. 417 ff.). Es ist ebenfalls möglich, den erfindungsgemäß eingesetzten mindestens einen Fluorkautschuk gemäß dem in DE 19844338 A1 beschriebenen Verfahren herzustellen.

Der mindestens eine Fluorkautschuk (Komponente A) ist in der erfindungsgemäßen vulkanisierbaren Mischung zu 100 Gew.-Teilen enthalten.

### Vernetzer (Komponente C):

Als Komponente C enthält die erfindungsgemäße vulkanisierbare Mischung einen Vernetzer ausgewählt aus bisphenolischen Vernetzern und peroxidischen Vernetzern, wobei bisphenolische Vernetzer bevorzugt sind.

Als bisphenolische Vernetzer eignen sich alle im Stand der Technik bekannten bisphenolischen Vernetzer.

Geeignete bisphenolische Vernetzer sind bevorzugt Bisphenole der allgemeinen Formel 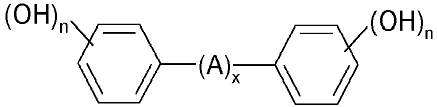 worin
- A: ein stabiler bivalenter Rest ist, bevorzugt ein bivalenter aliphatischer Rest mit 1 bis 13 Kohlenstoffatomen, ein bivalenter cycloaliphatischer Rest mit 3 bis 13 Kohlenstoffatomen oder ein bivalenter aromatischer Rest mit 6 bis 20 Kohlenstoffatomen, oder ein Thiorest, ein Oxyrest, ein Carbonylrest, ein Sulfinylrest oder ein Sulfonylrest, wobei A gegebenenfalls mit mindestens einem Chlor- oder Fluoratom substituiert sein kann;
- x: ist 0 oder 1,
- n: ist 1 oder 2 und
wobei jeder aromatische Ring des bisphenolischen Vernetzers der Formel (I) gegebenenfalls mit einem oder mehreren Substituenten ausgewählt aus Chlor, Fluor, Brom, -CHO, einem Carboxyl- oder einem Acyl-Radikal, bevorzugt -COR, worin R OH, C₁-C₈-Alkyl, Aryl oder Cycloalkyl bedeutet, substituiert sein kann.

Besonders bevorzugt geeignete A-Gruppen sind Methylen, Ethylen, Chlorethylen, Fluorethylen, Difluorethylen, 1,3-Propylen, 1,2-Propylen, Tetramethylen, Chlortetramethylen, Fluortetramethylen, Trifluortetramethylen, 2-Methyl-1,3-propylen, 2-Methyl-1,2-propylen, Pbntamethylen, Hexamethylen, Ethyliden, Dichloroethyliden, Difluorethyliden, Propyliden, Isopropyliden, Trifluoroisopropyliden, Hexafluoroisopropyliden, Butyliden, Heptachlorobutyliden, Heptafluorobutyliden, Pentyliden, Hexyliden, 1,1-Cyclohexyliden, 1,4-Cyclohexylen, 2-Chloro-1,4-cyclohexylen, 2-Fluoro-1,4-cyclohexylen, 1,3-Cyclohexylen, Cyclopentylen, Chlorocyclopentylen, Fluoropentylen, Cycloheptylen, m-Phenylen, p-Phenylen, 2-Chloro-1,4-phenylen, 2-Fluoro-1,4-phenylen, o-Phenylen, Methylphenylen, Dimethylphenylen, Trimethylphenylen, Tetramethylphenylen, 1,4-Napthylen, 3-Fluor-1,4-naphthylen, 5-Chloro-1,4-naphthylen, 1,5-Naphthylen und 2,6-Naphthylen.

Ganz besonders bevorzugt ist der bisphenolische Vernetzer ausgewählt aus 2,2-Bis(4-hydroxyphenyl)hexafluorpropan (Bisphenol AF) und 4,4'-Dihydroxydiphenylsulfon.

Geeignete peroxidische Vernetzer sind alle dem Fachmann zur Vernetzung von Fluorkautschuken bekannte peroxidische Vernetzer. Beispiele sind 2,5-Dimethyl-2,5-bis(tert-butylperoxy)hexan, Dicumylperoxid, tert.-Butylcumylperoxid, Di-tert.-butylperoxid, tert.-Butylbenzoat; 2,2-bis(tert-Butylperoxy)-buten; 4,4-di-tert-Butylperoxynonylvalerat; 2,5-Dimethyl-2,5-di(tert-butylperoxy) hexan, 1,3-bis-Butylperoxy(isopropyl)-benzol sowie 2,5-Dimethyl-2,5-di(t-butylperoxy)-hexyn-3.

Die vorstehend erwähnten bisphenolischen und peroxidischen Vernetzer sind kommerziell erhältlich bzw. gemäß dem Fachmann bekannten Verfahren herstellbar.

Im Allgemeinen wird die Komponente C, d.h. der bisphenolische oder peroxidische Vernetzer, in einer Menge von 1 bis 10 phr, bevorzugt 1,2 bis 5 phr, besonders bevorzugt 2 bis 4 phr eingesetzt (phr bedeutet: parts per hundred parts rubber).

Ein weiterer Gegenstand der vorliegenden Erfindung ist eine vulkanisierbare Mischung enthaltend
a) 100 Gew.-Teile der Komponente A,
b) >0 bis 20 Gew.-Teile, bevorzugt 0,5 bis 15 Gew.-Teile, besonders bevorzugt 1,0 bis 12 Gew.-Teile, ganz besonders bevorzugt 1,2 bis 11,5 Gew.-Teile, insbesondere ganz besonders bevorzugt 3,0 bis 11 Gew.-Teile, weiter insbesondere ganz besonders bevorzugt 4,0 bis 10 Gew.-Teile der Komponente B und
c) 1 bis 10 Gew.-Teile, bevorzugt 1,2 bis 5 Gew.-Teile, besonders bevorzugt 2 bis 4 Gew.-Teile der Komponente C,
wobei die Gew.-Teile der Komponenten B und C jeweils bezogen auf 100 Gew.-Teile der Komponente A sind.

Geeignete Komponenten A, B und C sind die vorstehend erwähnten Komponenten A, B und C.

Neben den Komponenten A, B und C kann die erfindungsgemäße vulkanisierbare Mischung zusätzliche Komponenten aufweisen.

### Füllstoff (Komponente D):

Zusätzlich kann die erfindungsgemäße vulkanisierbare Mischung neben den Komponenten A, B und C und gegebenenfalls mindestens einen Füllstoff D enthalten.

Bei dem Füllstoff kann es sich um einen organischen oder anorganischen Füllstoff handeln. Die Füllstoffe können isotroper oder anisotroper Natur sein. Geeignete Füllstoffe sind dem Fachmann bekannt. Beispielsweise können Füllstoffe ausgewählt aus Ruß, Aktivkohle, Graphit, SiO₂, Ton, Kieselgur, Kalk, Wollastonit, Kalziumcarbonat, Kalziumsilikat, Kalziumfluorid, Bariumsulfat, Polyhalogenolefine, insbesondere Polytetrafluorethylen (PTFE) und Polychlortrifluorethylen, und Mischungen davon eingesetzt werden. Besonders bevorzugt wird Ruß als Füllstoff eingesetzt.

Die Füllstoffe werden in den erfindungsgemäß vulkanisierbaren Mischungen im Allgemeinen in einer Menge von 0 bis 5 Gew.-Teilen (bezogen auf 100 Gew.-Teile des als Komponente A eingesetzten Fluorkautschuk), bevorzugt 20 bis 60 Gew.-Teilen, besonders bevorzugt 25 bis 50 Gew.-Teilen eingesetzt.

Ein weiterer Gegenstand der vorliegenden Erfindung ist eine vulkanisierbare Mischung enthaltend
a) 100 Gew.-Teile der Komponente A,
b) >0 bis 20 Gew.-Teile, bevorzugt 0,5 bis 15 Gew.-Teile, besonders bevorzugt 1,0 bis 12 Gew.-Teile, ganz besonders bevorzugt 1,2 bis 11,5 Gew.-Teile, insbesondere ganz besonders bevorzugt 3,0 bis 11 Gew.-Teile, weiter insbesondere ganz besonders bevorzugt 4,0 bis 10 Gew.-Teile der Komponente B,
c) 1 bis 10 Gew.-Teile, bevorzugt 1,2 bis 5 Gew.-Teile, besonders bevorzugt 2 bis 4 Gew.-Teile der Komponente C,
d) 0 bis 5 Gew.-Teile, bevorzugt 20 bis 60 Gew.-Teile, besonders bevorzugt 25 bis 50 Gew.-Teile der Komponente D, bevorzugt Ruß,
wobei die Gew.-Teile der Komponenten B und C jeweils bezogen auf 100 Gew.-Teile der Komponente A sind.

### Säureakzeptor (Komponente E):

Zusätzlich kann die erfindungsgemäße vulkanisierbare Mischung neben den Komponenten A, B, C und gegebenenfalls mindestens einem Füllstoff D einen Säureakzeptor als Komponente E enthalten.

Der Säureakzeptor dient im Allgemeinen zur Neutralisation von Fluorwasserstoff, der gegebenenfalls während des Vulkanisierungsprozesses der vulkanisierbaren Mischung freigesetzt wird. Geeignete Säureakzeptoren sind dem Fachmann bekannt. Beispielsweise können Metalloxide oder Metallhydroxide eingesetzt werden, wie Magnesiumoxid, Kalziumoxid, Zinkoxid, Magnesiumhydroxid oder Kalziumhydroxid. Des Weiteren können basische Metallsalze organischer Säuren als Säureakzeptoren eingesetzt werden wie zweibasiges Bleiphosphat, Natriumstearat oder Magnesiumoxalat. Ganz besonders bevorzugt werden Calciumhydroxid, Magnesiumoxid oder Zinkoxid als Säureakzeptoren eingesetzt.

Im Allgemeinen wird der Säureakzeptor in einer Menge von 0 bis 15 Gew.-Teilen (bezogen auf 100 Gew.-Teile des als Komponente A eingesetzten Fluorkautschuks), bevorzugt 1 bis 9 Gew.-Teilen, besonders bevorzugt 2 bis 8 Gew.-Teilen eingesetzt.

### Vulkanisationsbeschleuniger:

In dem Fall, dass als Vernetzer ein bisphenolischer Vernetzer eingesetzt wird, kann in einer bevorzugten Ausführungsform in den erfindungsgemäßen vulkanisierbaren Mischungen zusätzlich ein Vulkanisationsbeschleuniger vorhanden sein.

Grundsätzlich sind dem Fachmann zu einer Vernetzung von Fluorkautschuken mit bishpenolischen Vernetzern geeignete Beschleuniger bekannt.

Bevorzugt geeignete Vulkanisationsbeschleuniger sind Oniumsalze, besonders bevorzugt quartäre Phosphonium-, Ammonium-, Aminophosphonium-, Sulfonium-, Arsenium- oder Antimoniumverbindungen, ganz besonders bevorzugt Phosphonium- oder Ammoniumverbindungen. Geeignete Beispiele sind Benzyltriphenylphosphoniumtrichlorid, Benzyltributylphosphoniumchlorid, Bis-(benzyldiphenylphosphin)iminiumchlorid, Tetraphenylphosphoniumchlorid, Tetrabutylammoniumchlorid, Tetrabutylammoniumbisulfat, Tetrabutylammoniuimbromid, Tributylallylphosphoniumchlorid, Dibutyldiphenylphosphoniumchlorid, Tetrabutylphosphoniumchlorid sowie Triarylsulfoniumchlorid. Insbesondere ganz besonders bevorzugt wird Benzyltributylphosphoniumchlorid als Vulkanisationsbeschleuniger eingesetzt.

Der gegebenenfalls eingesetzte Vulkanisationsbeschleuniger wird im Allgemeinen in einer Menge von 0 bis 15 Gew.-Teilen, bezogen auf 100 Gew.-Teile des als Komponente A eingesetzten Fluorkautschuks, bevorzugt 0,1 bis 10 Gew.-Teilen, besonders bevorzugt 0,2 bis 8 Gew.-Teilen eingesetzt.

### Weitere Komponenten:

Zusätzlich zu den Komponenten A, B und C sowie gegebenenfalls D und gegebenenfalls E und dem gegebenenfalls vorliegenden Vulkanisationsbeschleuniger kann die erfindungsgemäße vulkanisierbare Mischung weitere Komponenten, z.B. Verarbeitungshilfsmittel oder Farbstoffe, enthalten. Diese weiteren Komponenten, insbesondere Verarbeitungshilfsmittel und Farbstoffe, sind dem Fachmann bekannt.

Üblicherweise werden die vorstehend erwähnten weiteren Komponenten jeweils in einer Menge von 0 bis 3 Gew.-Teilen (bezogen auf 100 Gew.-Teile des als Komponente A eingesetzten Fluorkautschuks), bevorzugt jeweils in 0,1 bis 1,5 Gew.-Teilen eingesetzt.

Die erfindungsgemäße vulkanisierbare Mischung weist im Allgemeinen eine Mooney-Viskosität (ML1+10@121°C) von 40 bis 100, bevorzugt 50 bis 90, besonders bevorzugt 55 bis 80 auf. Die Mooney-Viskosität wird nach DIN 53523 bestimmt.

Es wurde gefunden, dass die Mooney-Viskosität der vulkanisierbaren Mischungen durch die Zugabe der Komponente B deutlich herabgesetzt werden kann, so dass die Verarbeitungseigenschaften der erfindungsgemäßen vulkanisierbaren Mischung gegenüber vulkanisierbaren Mischungen des Standes der Technik, insbesondere in Einspritzverfahren, wesentlich verbessert werden kann.

Ein weiterer Gegenstand der vorliegenden Erfindung ist ein Verfahren zur Herstellung der erfindungsgemäßen vulkanisierbaren Mischung durch Mischen der Komponenten A, B und C sowie gegebenenfalls D und gegebenenfalls E sowie der gegebenenfalls weiteren vorstehend genannten vorliegenden Komponenten. Geeignete Mischverfahren sind dem Fachmann bekannt. Beispielsweise können zum Mischen Schnecken, Kneter oder Zweiwalzen-Gummimischwerke eingesetzt werden. Das Mischen wird im Allgemeinen bei Temperaturen von 10 bis 130 °C, bevorzugt 15 bis 110 °C durchgeführt.

Die erfindungsgemäßen vulkanisierbaren Mischungen können in beliebigen, dem Fachmann bekannten Verfahren, weiter verarbeitet werden, z.B. durch Spritzgießen (injection molding) oder Extrusion sowie durch Spritzpressen (transfer molding), Formpressen (compression molding) oder Kalandrieren. Aufgrund der niedrigen Mooney-Viskosität der erfindungsgemäßen vulkanisierbaren Mischungen wird eine Weiterverarbeitung zu Formkörpern durch Extrusions- oder Spritzgußtechnologie bevorzugt. Geeignete Verfahren sind dem Fachmann bekannt.

In einer Ausführungsform werden dabei die erfindungsgemäßen vulkanisierbaren Mischungen, bevorzugt mit Hilfe von dem Fachmann bekannten Spritzgießmaschinen, in im Allgemeinen 160 bis 230°C heiße Formen gespritzt und je nach Mischungsrezeptur und Formtemperatur im Allgemeinen 20 bis 300 s in der Form gehalten und dabei vulkanisiert.

Es wurde gefunden, dass die erfindungsgemäßen vulkanisierbaren Mischungen gegenüber vulkanisierbaren Mischungen des Standes der Technik eine erhöhte Vulkanisationsgeschwindigkeit zeigen, wodurch eine Beschleunigung der Vernetzung erreicht wird.

Ein weiterer Gegenstand der vorliegenden Erfindung ist somit ein Verfahren zur Herstellung eines Vulkanisats durch Vulkanisieren einer erfindungsgemäßen vulkanisierbaren Mischung. Bevorzugt erfolgt das Vulkanisieren nach dem vorstehend erwähnten Verfahren. Geeignete weitere Vulkanisierungsverfahren sind dem Fachmann bekannt.

Ein weiterer Gegenstand der vorliegenden Erfindung ist ein Vulkanisat, herstellbar nach dem erfindungsgemäßen Verfahren.

Es wurde gefunden, dass die mechanischen Eigenschaften des erfindungsgemäßen Vulkanisats, insbesondere das Zug-Dehnungsverhalten, die Härte und der Druckverformungsrest, vergleichbar sind mit den mechanischen Eigenschaften von Vulkanisaten, die auf Basis von vulkanisierbaren Mischungen erhalten werden, die keinen Carbonsäureester mit einem Siedepunkt > 250°C (Komponente B) enthalten. Zwar wurde gefunden, dass - trotz des hohen Siedepunkts der Komponente B - im Allgemeinen ein Teil der Komponente B während der Verarbeitung der erfindungsgemäßen vulkanisierbaren Mischungen abdampft, jedoch kommt es dabei (aufgrund des hohen Siedepunktes der eingesetzten Carbonsäureester) nicht zu einer Blasenbildung, so dass die mechanischen Eigenschaften der erfindungsgemäßen erhaltenen Vulkanisate nicht beeinflusst werden.

Die erfindungsgemäßen vulkanisierbaren Mischungen beziehungsweise die erfindungsgemäßen Vulkanisate eignen sich hervorragend zur Herstellung von Formkörpern aller Art, insbesondere Dichtungen, Schläuche, Profile, Dämpfungselemente, Kabelmäntel, Statoren, Kupplungen oder Manschetten.

Ein weiterer Gegenstand der vorliegenden Erfindung ist daher die Verwendung der erfindungsgemäßen vulkanisierbaren Mischungen beziehungsweise die Verwendung des erfindungsgemäßen Vulkanisats zur Herstellung von Formkörpern.

Aufgrund der niedrigen Mooney-Viskosität der erfindungsgemäßen vulkanisierbaren Mischungen, sind diese insbesondere zur Verarbeitung in der Spritzgruß- oder Extrusions-Molding-Technologie geeignet, so dass die Formkörper bevorzugt Spritzgußteile sind, insbesondere Dichtungen, Schläuche und Profile.

Die nachfolgenden Beispiele erläutern die Erfindung zusätzlich.

### BEISPIELE

### 1. Normen/Bedingungen/Informationen

| **Test** | **Bedingungen** | **Norm** | **Information** |
|---|---|---|---|
| **Mooney** | ML1+4@121°C | DIN 53523 | Mooney-Viskosität |
| | ML1+8@121°C | | |
| | ML1+10@121°C | | |
| **Moving Die Rheomometer (MDR)** | "Moving Die Rheomometer" von Alpha technology (MDR2000) | ISO 6502 oder ASTM D 5289 | Vernetzungsverhalten: |
| | | | Delta S' |
| | | | Umsatzzeit 50% |
| | | | Umsatzzeit 90% |
| **Form-Einspritzverhalten** | Rheovulkameter von Göttfert Rheovulkameter | | Form-Einspritzverhalten |
| **Zug-Dehnungsverhalten** | Zugversuch Normstab 2 | DIN 53504 | Zugfestigkeit (ZF) Zugdehnung (ZD) |
| **Härte** | Shore A | ISO 7619 | Härte |
| **Druckverformungsrest (DVR)** | 70h/200°C | DIN 53517 | Druckverformungsrest |
| **Schrumpf** | Messung eines FKM compounds vor der Temperung und nach der Temperung. | | |
| | (Temperung: 230°C/24h; Länge 295mm; Breite:20mm; Dicke: 4,8mm) | | |

### 2. Vernetzbare Zusammensetzungen und Vulkanisate

### Allgemeine Arbeitsvorschrift:

Zur Herstellung einer vernetzbaren Zusammensetzung werden auf einem gut gekühlten Zweiwalzenmischwerk die einzelnen Komponenten der entsprechenden nachstehend genannten Mischungen (1a, 1b, 1c, 1d, 1e, 1f, 2a, 2b, 2c, 2d, 3a, 3b) bei einer Temperatur von 20°C eingearbeitet.

Das Vernetzungsverhaltens der so hergestellten jeweiligen Mischungen wurde in einem "Moving Die Rheomometer" von Alpha Technology bei 177 °C untersucht (Messzeit: 30 min). Des Weiteren wird das Form-Einspritzverhalten der jeweiligen Mischungen an einem Rheovulkameter von Göttfert Rheovulkameter bei 180°C und 50 bar untersucht.

Die jeweilige Mischung wird bei 177 °C und 120 bar in Formen für 100 x 100 x 2 mm Platten, 6,3 mm Klappenfell 10 min druckvulkanisiert und anschließend in einem Umluftofen nachvulkanisiert (24 h bei 230 °C). An den vulkanisierten Formkörpern werden das Zug-Dehnungsverhalten, die Härte und die Druckverformungsreste bestimmt.

Die Ergebnisse sowie ein Vergleich mit einem Vergleichsvulkanisat sind nachstehend aufgelistet. Das Vergleichsvulkanisat (Standard) ist mit den nachstehend genannten erfindungsgemäßen Mischungen identisch, mit dem einzigen Unterschied, dass der Carbonsäureester weggelassen wird.

### I Bisphenolische Vernetzung

| **Ii** | **Mischung 1a** |
|---|---|
| 100 phr | Levatherm® F 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 5 phr | Adimoll® DB⁷⁾ |

| | |
|---|---|
| 1) FKM-Copolymer aufgebaut aus Vinylidenfluorid und Hexafluorpropylen (Lanxess Deutschland GmbH) 2) Lehmann & Voss 3) Sturge 4) Rhein Chemie 5) Bisphenol AF, 50 Gew.%ig angebatcht in Levatherm® F 6623 6) BTPPC (Benzyltriphenylphosphoniumchlorid), 33Gew.%ig angebatcht in Levatherm® F 6623 7) aliphatischer Carbonsäureester - Di-n-butyladipat, von Lanxess Deutschland GmbH | |

| **Iii** | **Mischung 1b** |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 10 phr | Adimoll® DB⁷⁾ |

| | |
|---|---|
| 1) FKM-Copolymer aufgebaut aus Vinylidenfluorid und Hexafluorpropylen (Lanxess Deutschland GmbH) 2) Lehmann & Voss 3) Sturge 4) Rhein Chemie 5) Bisphenol AF, 50 Gew.%ig angebatcht in Levatherm® F 6623 6) BTPPC (Benzyltriphenylphosphoniumchlorid), 33 Gew.%ig angebatcht in Levatherm® F 6623 7) aliphatischer Carbonsäureester - Di-n-butyladipat, von Lanxess Deutschland GmbH | |

| **Iii** | **Mischung 1c** |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 2,5 phr | Adimoll® DB⁷⁾ |

| | |
|---|---|
| 1) FKM-Copolymer aufgebaut aus Vinylidenfluorid und Hexafluorpropylen von Lanxess Deutschland GmbH 2) Lehmann & Voss 3) Sturge 4) Rhein Chemie 5) Bisphenol AF, 50 Gew.%ig angebatcht in Levatherm F ® 6623 6) BTPPC (Benzyltriphenylphosphoniumchlorid), 33 Gew.%ig angebatcht in Levatherm F ® 6623 7) aliphatischer Carbonsäureester - Di-n-butyladipat, von Lanxess Deutschland GmbH | |

| **Iiv** | **Mischung 1d** |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 1,5 phr | Adimoll® DB⁷⁾ |

| | |
|---|---|
| 1) FKM-Copolymer aufgebaut aus Vinylidenfluorid und Hexafluorpropylen von Lanxess Deutschland GmbH 2) Lehmann & Voss 3) Sturge 4) Rhein Chemie 5) Bisphenol AF, 50 Gew.%ig angebatcht in Levatherm F ® 6623 6) BTPPC (Benzyltriphenylphosphoniumchlorid), 33 Gew.%ig angebatcht in Levatherm F ® 6623 7) aliphatischer Carbonsäureester - Di-n-butyladipat, von Lanxess Deutschland GmbH | |

| **Iv** | **Mischung 1e** |
|---|---|
| 100 phr | Levatherm® F 6833¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 5 phr | Adimoll® DB⁷⁾ |

| | |
|---|---|
| 1) FKM-Terpolymer aufgebaut aus Vinylidenfluorid Hexafluorpropylen und Tetrafluorethylen (Lanxess Deutschland GmbH) 2) Lehmann & Voss 3) Sturge 4) Rhein Chemie 5) Bisphenol AF, 50 Gew.%ig angebatcht in Levatherm F ® 6623 6) BTPPC (Benzyltriphenylphosphoniumchlorid), 33 Gew.%ig angebatcht in Levatherm F ® 6623 7) aliphatischer Carbonsäureester - Di-n-butyladipat, von Lanxess Deutschland GmbH | |

| **Ivi** | **Mischung 1f** |
|---|---|
| 100 phr | Levatherm F ® 6833¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 ®⁶⁾ |
| 10 phr | Adimoll DB®⁷⁾ |

| | |
|---|---|
| 1) FKM-Terpolymer aufgebaut aus Vinylidenfluorid Hexafluorpropylen und Tetrafluorethylen von Lanxess Deutschland GmbH 2) Lehmann & Voss 3) Sturge 4) Rhein Chemie 5) Bisphenol AF, 50 Gew.%ig angebatcht in Levatherm F ® 6623 6) BTPPC (Benzyltriphenylphosphoniumchlorid), 33 Gew.%ig angebatcht in Levatherm F ® 6623 7) aliphatischer Carbonsäureester - Di-n-butyladipat, von Lanxess Deutschland GmbH | |

**II Peroxidische Vernetzung**

| **IIi** | **Mischung IIa** |
|---|---|
| 100 phr | Levatherm F 7043 ®¹⁾ |
| 30 phr | Ruß N990 ®²⁾ |
| 3 phr | Luperox ® 101XL45-SP2³⁾ |
| 3 phr | Kettlitz-TAIC⁴⁾ |
| 3 phr | ZnO⁵⁾ |
| 5 phr | Adimoll DB®⁶⁾ |

| | |
|---|---|
| 1) FKM-Terpolymer aufgebaut aus Vinylidenfluorid, Tetrafluorethylen und Hexafluorpropylen und einem cure site monomer (CSM) von Lanxess Deutschland GmbH 2) Lehmann & Voss 3) Peroxid, Luperox 101XL45-SP2® von Arkema 4) Coaktivator Triallylisocyanurat, Nordmann , Rassmann 5) Lanxess Deutschland GmbH 6) aliphatischer Carbonsäureester - Di-n-butyladipat, von Lanxess Deutschland GmbH | |

| **IIii** | **Mischung IIb** |
|---|---|
| 100 phr | Levatherm F 7043 ®¹⁾ |
| 30 phr | Ruß N990 ®²⁾ |
| 3 phr | Luperox ® 101XL45-SP2³⁾ |
| 3 phr | Kettlitz-TAIC⁴⁾ |
| 3 phr | ZnO⁵⁾ |
| 10 phr | Adimoll DB®⁶⁾ |

| | |
|---|---|
| 1) FKM-Terpolymer aufgebaut aus Vinylidenfluorid, Tetrafluorethylen und Hexafluorpropylen und einem cure site monomer (CSM) von Lanxess Deutschland GmbH 2) Lehmann & Voss 3) Peroxid, Luperox 101XL45-SP2® von Arkema 4) Coaktivator Triallylisocyanurat, Nordmann , Rassmann 5) Lanxess Deutschland GmbH 6) aliphatischer Carbonsäureester - Di-n-butyladipat, von Lanxess Deutschland GmbH | |

| **IIiii** | **Mischung IIc** |
|---|---|
| 100 phr | Levatherm F 7044 ®¹⁾ |
| 30 phr | Ruß N990 ®²⁾ |
| 3 phr | Luperox ® 101XL45-SP2³⁾ |
| 3 phr | Kettlitz-TAIC⁴⁾ |
| 3 phr | ZnO⁵⁾ |
| 5 phr | Adimoll DB®⁶⁾ |

| | |
|---|---|
| 1) FKM-Terpolymer aufgebaut aus Vinylidenfluorid, Tetrafluorethylen und Hexafluorpropylen und einem cure site monomer (CSM) von Lanxess Deutschland GmbH 2) Lehmann & Voss 3) Peroxid, Luperox® 101XL45-SP2 von Arkema 4) Coaktivator Triallylisocyanurat, Nordmann , Rassmann 5) Lanxess Deutschland GmbH 6) aliphatischer Carbonsäureester - Di-n-butyladipat, von Lanxess Deutschland GmbH | |

| **IIiv** | **Mischung IId** |
|---|---|
| 100 phr | Levatherm F 7044 ®¹⁾ |
| 30 phr | Ruß N990 ®²⁾ |
| 3 phr | Luperox ® 101XL45-SP2³⁾ |
| 3 phr | Kettlitz-TAIC⁴⁾ |
| 3 phr | ZnO⁵⁾ |
| 10 phr | Adimoll DB®⁶⁾ |

| | |
|---|---|
| 1) FKM-Terpolymer aufgebaut aus Vinylidenfluorid, Tetrafluorethylen und Hexafluorpropylen und cure site monomer (CSM) von Lanxess Deutschland GmbH 2) Lehmann & Voss 3) Peroxid, Luperox® 101XL45-SP2 von Arkema 4) Coaktivator Triallylisocyanurat, Nordmann , Rassmann 5) Lanxess Deutschland GmbH 6) aliphatischer Carbonsäureester - Di-n-butyladipat, von Lanxess Deutschland GmbH | |

Die Vergleichsmischung (Standard) entspricht der jeweiligen erfindungsgemäßen Mischung, wobei die Vergleichsmischung keinen Carbonsäureester enthält. Die Herstellung der vulkanisierbaren Vergleichsmischung und die Vulkanisation erfolgen in gleicher Weise wie die Herstellung der erfindungsgemäßen vulkanisierbaren Mischungen und Vulkanisate.

### 3. Eigenschaften der vernetzbaren Zusammensetzungen und Vulkanisate basierend auf den Mischungen Ia, Ib, Ic und Id

In den nachfolgenden Tabellen sind die Eigenschaften der erfindungsgemäßen vernetzbaren Zusammensetzungen und Vulkanisate basierend auf den Mischungen Ia, Ib, Ic und Id im Vergleich zu dem vorstehend genannten Standard zusammengefasst. Untersucht wurden Mooney Viskosität, MDR, Zugfestigkeit, Reißdehnung, DVR, Härte, Schrumpf.

### 3.1. DVR

| **Zeit** | **h** | **70** |
|---|---|---|
| **Temperatur** | °C | 200 |
| **Verformung** | % | 25 |
| **Prüftemperatur** | °C | 23 |
| **Gleitmittel** | Glimmerpuder | |

| | **Standard** | **Mischung 1a** | **Mischung 1b** | **Mischung 1c** | **Mischung 1d** |
|---|---|---|---|---|---|
| **DVR** | 28 | 29 | 28 | 32 | 31 |

### 3.2 Härte

| | | | |
|---|---|---|---|
| **Temperatur** | | °C | 23 |

| | **Standard** | **Mischung 1a** | **Mischung 1b** | **Mischung 1c** | **Mischung 1d** |
|---|---|---|---|---|---|
| **Härte Mittelwert (Shore A)** | 72 | 73 | 72 | 74 | 73 |

### 3.3 Reißdehnung und Festigkeit

| | | | |
|---|---|---|---|
| Temperatur | | °C | 23 |

| | **Standard** | **Mischung 1a** | **Mischung 1b** | **Mischung 1c** | **Mischung 1d** |
|---|---|---|---|---|---|
| **D Median (%)** | 179 | 192 | 180 | 182 | 197 |
| **F Median (MPa)** | 14 | 13 | 13 | 13 | 14 |

### 3.4 Mooney Viskosität der vernetzbaren Zusammensetzung

| **Rotorgröße** | | | **L** |
|---|---|---|---|
| **Vorheizzeit** | | [min] | 1 |
| **Messzeit** | | [min] | 10 |
| **Temperatur** | | [°C] | 121 |

| | | **Standard** | **Mischung 1a** | **Mischung 1b** | **Mischung 1c** | **Mischung 1d** |
|---|---|---|---|---|---|---|
| **ML 1+4** | **[ME]** | 67 | 40 | 23 | 52 | 59 |
| **ML 1+8** | **[ME]** | 65 | 41 | 24 | 52 | 57 |
| **ML 1+10** | **[ME]** | 65 | 42 | 26 | 52 | 57 |

### 3.5 MDR

| **Prüftemperatur** | | [°C] | 177 |
|---|---|---|---|
| **Prüfzeit** | | [min] | 30 |

| | **Standard** | **Mischung 1a** | **Mischung 1b** | **Mischung 1c** | **Mischung 1d** |
|---|---|---|---|---|---|
| **Delta S'** | 20 | 17 | 14 | 19 | 19 |
| **Umsatzzeit 50%** | 107 | 75 | 50 | 87 | 97 |
| **Umsatzzeit 90%** | 222 | 121 | 75 | 158 | 169 |

### 3.6 Schrumpf

| | **Standard** | **Mischung 1a** | **Mischung 1b** |
|---|---|---|---|
| **Länge(Vulk.)** | 295 | 294 | 294 |
| **Breite(Vulk.)** | 20 | 20 | 20 |
| **Dicke(Vulk.)** | 4,9 | 4,9 | 4,9 |
| **Länge(Temp.)** | 292 | 287 | 281 |
| **Breite(Temp.)** | 20 | 19 | 19 |
| **Dicke(Temp.)** | 4,9 | 4,8 | 4,7 |
| | | | |

| | **Standard** | **Mischung 1c** | **Mischung 1d** |
|---|---|---|---|
| **Länge(Vulk.)** | 295 | 295 | 295 |
| **Breite(Vulk.)** | 20 | 20 | 20 |
| **Dicke(Vulk.)** | 4,8 | 4,7 | 4,8 |
| **Länge(Temp.)** | 290 | 290 | 289 |
| **Breite(Temp.)** | 20 | 20 | 20 |
| **Dicke(Temp.)** | 4,8 | 4,7 | 4,8 |

Die in den vorstehenden Tabellen dargestellten Ergebnisse zeigen, dass die Mooney-Viskosität der erfindungsgemäßen vulkanisierbaren Mischungen gegenüber der Vergleichsmischung deutlich erniedrigt ist und damit die Verarbeitbarkeit wesentlich verbessert wird. Des Weiteren wird durch die Zugabe der erfindungsgemäß eingesetzten Carbonsäureester die Vulkanisationsgeschwindigkeit wesentlich erhöht.

Die mechanischen Eigenschaften werden durch den erfindungsgemäßen Einsatz der Carbonsäureester nicht beeinflusst.

### 4. Rheovulkameter Messungen

Die Rheovulkameter Messungen werden an den Mischungen 3a und 3b und einem Standard, der kein Adimoll DB enthält, durchgeführt:

| **Ansatz-Nr.** | | | **GD A 25 2** | **GD A 25 3** |
|---|---|---|---|---|
| **Ansatz-Bezeichnung :** | | **Standard** | **Mischung 3a** | **Mischung 3b** |
| **LEVATHERM F 6623¹⁾** | | 100 | 100 | 100 |
| **LUVOMAXX MT N-990²⁾** | | 30 | 30 | 30 |
| **LEVATHERM FC 20³⁾** | | 2 | 2 | 2 |
| **LEVATHERM FC 30⁴⁾** | | 4 | 4 | 4 |
| **CALCIUMHYDROXID⁵⁾** | | 6 | 6 | 6 |
| **MAGLITE DE⁶⁾_** | | 3 | 3 | 3 |
| **ADIMOLL DB⁷⁾** | | | 5 | 5 |
| **AFLUX 18 (GE 1855)⁸⁾** | | | | 1 |

| | | | | |
|---|---|---|---|---|
| 1) FKM-Copolymer aufgebaut aus Vinylidenfluorid und Hexafluorpropylen von Lanxess Deutschland GmbH 2) Luvomaxx® N990 von Lehmann & Voss (Thermal Russ mit einer kleinen Oberfläche) 3) BTPPC (Benzyltriphenylphosphoniumchlorid), Organica 4) Bisphenol AF, 50%ig angebatcht in Levatherm F ® 6623 5) Sturge 6) Rhein Chemie 7) aliphatischer Carbonsäureester - Di-n-butyladipat, von Lanxess Deutschland GmbH 8) Rhein Chemie | | | | |

In der nachfolgenden Tabelle ist das Ergebnis der Rheovulkameter Messungen zusammengefasst:

| **Probekörper : HKR-Prüfung** | | | | | |
|---|---|---|---|---|---|
| **Rheovulkameter** | | | | | |
| **Ansatz-Nr.** | | | GD A 25 1 | GD A 25 2 | GD A 25 3 |
| **Ansatz-Bezeichnung :** | | | Standard | Mischung 3a | Mischung 3b |
| **Mischstufe** | | | 3 | 3 | 3 |

| **Prüf-Parameter** | | | | | |
|---|---|---|---|---|---|
| **Werkzeug** | Verästelungswerkzeug | | | | |
| **Vordruckzeit** | s | 0,4 | | | |
| **Vorwärmzeit** | s | 100 | | | |
| **Prüfdruck** | bar | 50 | | | |

| **Probekörper : HKR-Prüfung** | | | | | |
|---|---|---|---|---|---|
| **Temperatur Stempel** | °C | 100 | | | |
| **Temperatur Düse** | °C | 100 | | | |
| **Temperatur Werkzeug** | °C | 180 | | | |
| **Einspritzzeit** | sec | 20 | | | |
| **Vulkanisationszeit** | min | 5 | | | |

| **Prüf-Größe** | | | | | |
|---|---|---|---|---|---|
| **Volumen** | cm³ | | 0,68 | 1,42 | 1,86 |
| **Volumengeschwindigkeit** | cm³/s | | 0,042 | 0,07 | 0,091 |
| **Füllgrad** | % | | 23,4 | 51,2 | 63,1 |

Man sieht, dass der Füllgrad bei Zugabe von Adimoll DB um mehr als das doppelte ansteigt.

### 5. Vergleichsversuch (Diethyltartrat als Dicarbonsäureester)

Als Vergleichsversuch werden die Beispiele Ii bis Iii (Mischungen 1a und 1b) wiederholt, wobei anstelle von Adimoll® DB die entsprechenden Mengen Diethytartrat in den Mischungen eingesetzt werden (Mischungen V4a und V4b).

| **Mischung** | **Standard** | **V4a** | **V4b** |
|---|---|---|---|
| **LEVATHERM F 6623¹⁾** | 100 | 100 | 100 |
| **LUVOMAXX MT N-990²⁾** | 30 | 30 | 30 |
| **LEVATHERM FC 20³⁾** | 2 | 2 | 2 |
| **LEVATHERM FC 30⁴⁾** | 4 | 4 | 4 |
| **CALCIUMHYDROXID⁵⁾** | 6 | 6 | 6 |
| **MAGLITE DE⁶⁾_** | 3 | 3 | 3 |
| **DIETHYL-L-TARTRAT⁷⁾** | | 5 | 10 |

| | | | |
|---|---|---|---|
| 1) FKM-Copolymer aufgebaut aus Vinylidenfluorid und Hexafluorpropylen von Lanxess Deutschland GmbH 2) Luvomaxx® N990 von Lehmann & Voss (Thermal Russ mit einer kleinen Oberfläche) 3) BTPPC (Benzyltriphenylphosphoniumchlorid), Organica 4) Bisphenol AF, 50%ig angebatcht in Levatherm F ® 6623 5) Sturge 6) Rhein Chemie 7) (2R,3R)-(+)-Diethyltartrat (L-Weinsäurediethylester), kommerziell erhältlich (Merck-Chemicals) | | | |

### 5.1 Mooney Viskosität der vernetzbaren Zusammensetzung

| **Rotorgröße** | | | **L** |
|---|---|---|---|
| **Vorheizzeit** | | [min] | 1 |
| **Messzeit** | | [min] | 10 |
| **Temperatur** | | [°C] | 121 |

| | | **Standard** | **Mischung V4a** | **Mischung V4b** |
|---|---|---|---|---|
| **ML 1+4** | [ME] | 66 | 47 | 44 |
| **ML 1+8** | [ME] | 63 | 44 | 49 |
| **ML 1+10** | [ME] | 62 | 44 | 54 |

Im Vergleich zu den erfindungsgemäßen Beispielen 1a und 1b ist die Mooney Absenkung in den Vergleichsbeispielen V4a und V3b sehr gering. Zusätzlich tritt in Vergleichsbeispiel V4b ein Mooney Scorch auf.

### 5.2 MDR

| **Prüftemperatur** | | **[°C]** | 177 |
|---|---|---|---|
| **Prüfzeit** | | [min] | 30 |

| | **Standard** | **Mischung V4a** | **Mischung V4b** |
|---|---|---|---|
| **Delta S'** | 20 | 16 | 11 |
| **Umsatzzeit 50%** | 117 | 91 | 105 |
| **Umsatzzeit 90%** | 219 | 138 | 291 |

Die Vernetzungsdichte in Vergleichsbeispiel V4b ist sehr gering. In Vergleichsbeispiel V4a findet eine Reversion statt, d.h. die gebildete Vernetzung wird wieder zerstört.

### 5.3 DVR

| **Zeit** | | **h** | **70** |
|---|---|---|---|
| **Temperatur** | | °C | 200 |
| **Verformung** | | % | 25 |
| **Prüftemperatur** | | °C | 23 |
| **Gleitmittel** | | Glimmerpuder | |

| | **Standard** | **Mischung V4a** | **Mischung V4b** |
|---|---|---|---|
| **DVR** | 24 | 36 | 41 |

Der DVR in den Vergleichsbeispielen V4a und V4b ist hoch, da die Vernetzung gestört ist.

### 5.4 Härte

| | | | |
|---|---|---|---|
| **Temperatur** | | °C | 23 |

| | **Standard** | **Mischung V4a** | **Mischung V4b** |
|---|---|---|---|
| **Härte Mittelwert (Shore A)** | 73 | 73 | 71 |

### 5.5 Reißdehnung und Festigkeit

| | | | |
|---|---|---|---|
| **Temperatur** | | °C | 23 |

| | **Standard** | **Mischung V4a** | **Mischung V4b** |
|---|---|---|---|
| **D Median (%)** | 197 | 190 | 178 |
| **F Median (MPa)** | 13 | 13 | 13 |

### Fazit:

Bei einem Einsatz von 5 phr bzw. 10 phr Diethyltartrat treten Mooneyscorch und eine schlechte Vernetzung auf. Zusätzlich werden die mechanischen Eigenschaften negativ beeinflusst. Die Mooney Absenkung ist im Vergleich den erfindungsgemäßen Beispielen 1a und 1b sehr gering.

## Patentansprüche

1. Vulkanisierbare Mischung, enthaltend
a) mindestens einen Fluorkautschuk als Komponente A,
b) mindestens einen Dicarbonsäureester oder Polyetherester mit einem Siedepunkt von > 250°C, wobei der Dicarbonsäureester und der Polyetherester OH-Gruppen frei sind und der Dicarbonsäureester ausgewählt ist aus der Gruppe bestehend aus Adipaten, Phthalaten und Cyclohexandicarbonsäureestern, als Komponente B, und
c) einen Vernetzer, ausgewählt aus bisphenolischen Vernetzern und peroxidischen Vernetzern, als Komponente C.

2. Vulkanisierbare Mischung nach Anspruch 1, **dadurch gekennzeichnet, dass** die Dicarbonsäureester und Polyetherester ausgewählt sind aus der Gruppe bestehend aus Diadipaten, bevorzugt Di-n-butyladipat, Benzyl-2-ethylhexyladipat, Diethyladipat, Di-ethylhexyladipat, Di-isobutyladipat, Adipat-adipinsäure, Bis(nonylphenyl)adipat, Bis(methylcyclohexyl)adipat, Bis(2-fluoro-2,2-dinitroethyl)adipat, Bis(3,5,5-trimethylhexyl)adipat, Bis(1-methylpentadecyl)adipat, Bis(4-methylcyclohexyl)adipat, Di(tridecyl)adipat, Bis[2-(dimethylamino)ethyl]adipat, Bis(bicyclo[2.2.1]hept-5-en-2-yl-methyl)adipat, Bis(tetrahydrofurfuryl)adipat, Bis(2-hexyldecyl)adipat, Bis(2-mercaptoethyl)adipat, Bis(cyclohex-3-enylmethyl)adipat, Bis(2,3-epoxypropyl)adipat, Bis[2-[2-isopropyloxazolidin-3-yl]ethyl]adipat, Bis[(6-methylcyclohex-3-enyl)methyl]adipat, Dicapryladipat, Bis(6-methylheptyl)adipat, Bis[2-[[4-(2,2-dicyanovinyl)-3-methylphenyl]ethylamino]ethyl]adipat, Bis[2-(diethylamino)ethyl]adipat, Bis[(3,4-epoxy-6-methylcyclohexyl)methyl]adipat, Bis[2-[ethyl(3-methylphenyl)amino]-ethyl]adipat, Bis(1-butylpentyladipat, Bis[2-[2-(2-butoxyethoxy)ethoxy]ethyl]adipat, Bis(3,4-epoxycyclohexylmethyl)adipat, Bis(2-butoxyethyl)adipat, Bis(2-methoxyethyl)-adipat, Bis[2-(2-butoxyethoxy)ethyl]adipat, Dioctylsebacat, Polyetherestern, insbesondere (Poly(oxy-1,2-ethandiyl), Tris(2-ethyl)-2-acetyloxy-propan-1,2,3-tricarboxylat, Cyclohexyldiestem, bevorzugt 1,2-, 1,3- oder 1,4-Diisononylcyclohexylester, Phthalaten, bevorzugt 1,2-, 1,3- oder 1,4-Di-n-octylphthalat, 1,2-, 1,3- oder 1,4-Diisononylphthalat, 1,2-, 1,3- oder 1,4-Diisodecylphthalat, 1,2-, 1,3- oder 1,4-Diisobutylphthalat, 1,2-, 1,3-oder 1,4-Diethylphthalat, 1,2-, 1,3- oder 1,4-Dimethylphthalat, 1,2-, 1,3- oder 1,4-Diethylhexylphthalat, 1,2-, 1,3- oder 1,4-Di-n-butylphthalat, 1,2-, 1,3- oder 1,4-Butylbenzylphthalat, 1,2-, 1,3- oder 1,4-Di-n-nonylphthalat, 1,2-, 1,3- oder 1,4-Di-n-decylphthalat und Mischungen davon.

3. Vulkanisierbare Mischung nach Anspruch 1 oder 2, **dadurch gekennzeichnet, dass** der Fluorkautschuk ein Fluorkautschuk ist, der aus einem oder mehreren der folgenden Monomere aufgebaut ist:
- gegebenenfalls substituierte Ethylene, die neben Fluor Wasserstoff und/oder Chlor enthalten können, bevorzugt Vinylidenfluorid, Tetrafluorethylen und Chlortrifluorethylen,
- fluorierte 1-Alkene mit 3 bis 8 Kohlenstoffatomen, bevorzugt Hexafluorpropylen, 3,3,3-Trifluorpropylen, Chlorpentafluorpropylen, Hexafluorisobuten und
- perfluorierte Vinylether;
bevorzugt ist der Fluorkautschuk ein Homo-, Co- oder Terpolymer aufgebaut aus einem oder mehreren der vorstehend genannten Monomere; besonders bevorzugt wird eine Kombination aus Vinylidenfluorid, Hexafluorpropylen und/oder Tetrafluorethylen eingesetzt, ganz besonders bevorzugte Fluorkautschuke sind:
- Copolymere aufgebaut aus Vinylidenfluorid und Tetrafluorethylen, oder
- Copolymere aufgebaut aus Vinylidenfluorid und Hexafluorpropylen, oder
- Terpolymere aufgebaut aus Vinylidenfluorid, Tetrafluorethylen und Hexafluorpropylen, oder
- Terpolymere aufgebaut aus Vinylidenfluorid, Tetrafluorethylen, Hexafluorpropylen und mindestens einem zur peroxidischen Vernetzung geeigneten Monomeren.

4. Vulkanisierbare Mischung nach einem der Ansprüche 1 bis 3, **dadurch gekennzeichnet, dass** der Vernetzer C ausgewählt ist aus bisphenolischen Vernetzern der allgemeinen Formel 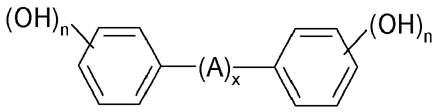 worin
A ein stabiler bivalenter Rest ist, bevorzugt ein bivalenter aliphatischer Rest mit 1 bis 13 Kohlenstoffatomen, ein bivalenter cycloaliphatischer Rest mit 3 bis 13 Kohlenstoffatomen oder ein bivalenter aromatischer Rest mit 6 bis 20 Kohlenstoffatomen, oder ein Thiorest, ein Oxyrest, ein Carbonylrest, ein Sulfinylrest oder ein Sulfonylrest, wobei A gegebenenfalls mit mindestens einem Chlor- oder Fluoratom substituiert sein kann;
x ist 0 oder 1,
n ist 1 oder 2, und wobei
jeder aromatische Ring des bisphenolischen Vernetzers der Formel (I) gegebenenfalls mit einem oder mehreren Substituenten ausgewählt aus Chlor, Fluor, Brom, -CHO, einem Carboxyl- oder einem Acyl-Radikal, bevorzugt -COR, worin R OH, C₁-C₈-Alkyl, Aryl oder Cycloalkyl bedeutet, substituiert sein kann; und der bisphenolische Vernetzer bevorzugt ausgewählt ist aus 2,2-Bis(4-hydroxyphenyl)hexafluorpropan (Bisphenol AF) und 4,4'-Dihydroxydiphenylsulfon; und
peroxidischen Vernetzern ausgewählt aus 2,5-Dimethyl-2,5-bis(tert-butylperoxy)hexan, Dicumylperoxid, tert.-Butylcumylperoxid, Di-tert.-butylperoxid, tert.-Butylbenzoat; 2,2-bis(tert-Butylperoxy)-buten; 4,4-di-tert-Butylperoxynonylvalerat; 2,5-Dimethyl-2,5-di(tert-butylperoxy) hexan, 1,3-bis-Butylperoxy(isopropyl)-benzol und 2,5-Dimethyl-2,5-di(t-butylperoxy)-hexyn-3.

5. Vulkanisierbare Mischung nach einem der Ansprüche 1 bis 4 enthaltend
a) 100 Gew.-Teile der Komponente A,
b) >0 bis 20 Gew.-Teile, bevorzugt 0,5 bis 15 Gew.-Teile, besonders bevorzugt 1,0 bis 12 Gew.-Teile, ganz besonders bevorzugt 1,2 bis 11,5 Gew.-Teile, insbesondere ganz besonders bevorzugt 3,0 bis 11 Gew.-Teile, weiter insbesondere ganz besonders bevorzugt 4,0 bis 10 Gew.-Teile der Komponente B und
c) 1 bis 10 Gew.-Teile, bevorzugt 1,2 bis 5 Gew.-Teile, besonders bevorzugt 2 bis 4 Gew.-Teile der Komponente C,
wobei sich die Gew.-Teile der Komponenten B und C jeweils auf 100 Gew.-Teile der Komponente A beziehen.

6. Vulkanisierbare Mischung nach einem der Ansprüche 1 bis 5 enthaltend mindestens einen Füllstoff als Komponente D, bevorzugt ausgewählt aus Ruß, Aktivkohle, Graphit, SiO₂, Ton, Kieselgur, Kalk, Wollastonit, Kalziumcarbonat, Kalziumsilikat, Kalziumfluorid, Bariumsulfat, Polyhalogenolefine, insbesondere Polytetrafluorethylen (PTFE) und Polychlortrifluorethylen, und Mischungen davon, besonders bevorzugt Ruß.

7. Vulkanisierbare Mischung nach Anspruch 6 enthaltend
a) 100 Gew.-Teile der Komponente A,
b) >0 bis 20 Gew.-Teile, bevorzugt 0,5 bis 15 Gew.-Teile, besonders bevorzugt 1,0 bis 12 Gew.-Teile, ganz besonders bevorzugt 1,2 bis 11,5 Gew.-Teile, insbesondere ganz besonders bevorzugt 3,0 bis 11 Gew.-Teile, weiter insbesondere ganz besonders bevorzugt 4,0 bis 10 Gew.-Teile der Komponente B,
c) 1 bis 10 Gew.-Teile, bevorzugt 1,2 bis 5 Gew.-Teile, besonders bevorzugt 2 bis 4 Gew.-Teile der Komponente C, und
d) 0 bis 5 Gew.-Teile, bevorzugt 20 bis 60 Gew.-Teile, besonders bevorzugt 25 bis 50 Gew.-Teile der Komponente D, bevorzugt Ruß,
wobei sich die Gew.-Teile der Komponenten B, C und D jeweils auf 100 Gew.-Teile der Komponente A beziehen.

8. Vulkanisierbare Mischung nach einem der Ansprüche 1 bis 7 enthaltend zusätzlich mindestens einen Säureakzeptor als Komponente E, bevorzugt ausgewählt aus Metalloxiden, Metallhydroxiden und Metallsalzen, besonders bevorzugt ausgewählt aus Magnesiumoxid, Kalziumoxid, Zinkoxid, Magnesiumhydroxid, Kalziumhydroxid, zweibasigem Bleiphosphat, Natriumstearat, Magnesiumoxalat und Mischungen davon, ganz besonders bevorzugt ausgewählt aus Calciumhydroxid, Magnesiumoxid, Zinkoxid und Mischungen davon.

9. Vulkanisierbare Mischung nach einem der Ansprüche 1 bis 8, **dadurch gekennzeichnet, dass** sie eine Mooney-Viskosität (ML1+10@121°C) von 40 bis 100, bevorzugt 50 bis 90, besonders bevorzugt 55 bis 80 aufweist.

10. Verfahren zur Herstellung der vulkanisierbaren Mischungen nach einem der Ansprüche 1 bis 9 durch Mischen der Komponenten A, B und C sowie gegebenenfalls D, gegebenenfalls E und gegebenenfalls weiterer Komponenten.

11. Verfahren zur Herstellung eines Vulkanisats durch Vulkanisieren einer Mischung gemäß einem der Ansprüche 1 bis 9.

12. Vulkanisat, herstellbar nach einem Verfahren gemäß Anspruch 11.

13. Verwendung der vulkanisierbaren Mischung nach einem der Ansprüche 1 bis 9 zur Verarbeitung in der Spritzguß- oder Extrusions-Molding-Technologie sowie durch Spritzpressen, Formpressen oder Kalandrieren.

14. Spritzgußteile, hergestellt aus einer vulkanisierbaren Mischung gemäß einem der Ansprüche 1 bis 9.

15. Verwendung einer vulkanisierbaren Mischung gemäß einem der Ansprüche 1 bis 9 zur Herstellung von Formkörpern.
